# EUROPÄISCHE PATENTSCHRIFT

(11) **EP 0 502 325 B1**
(45) Veröffentlichungstag und Bekanntmachung des Hinweises auf die Patenterteilung: **31.08.1994**
(21) Anmeldenummer: 92101768.7
(22) Anmeldetag: 04.02.1992
(51) Int. Cl.: C01B 33/32

(54) **Verfahren zur Herstellung von Natriumsilikaten**
Method for preparation of sodium silicates
Procédé de préparation de silicates de sodium

(30) Priorität: 07.03.1991 DE 4107230
(43) Veröffentlichungstag der Anmeldung: 09.09.1992
(73) Patentinhaber: HOECHST AKTIENGESELLSCHAFT, 65926 Frankfurt am Main (DE)
(72) Erfinder: Schimmel, Günther, Dr., W-5042 Erftstadt (DE); Kotzian, Michael, Dr., W-5042 Erftstadt (DE); Tapper, Alexander, Dr., W-4050 Mönchengladbach (DE); Wingefeld, Gerd, Dr., W-6238 Hofheim (DE)

(56) Entgegenhaltungen:
- EP-A- 0 170 040
- EP-A- 0 293 640
- EP-A- 0 425 428
- DE-A- 4 031 848
- FR-A- 2 157 943

## Beschreibung

Die vorliegende Erfindung betrifft ein Verfahren zur Herstellung von kristallinen Natriumsilikaten mit Schichtstruktur, einem Molverhältnis von SiO₂ zu Na₂O von (1,9 bis 2,1) : 1 und einem Wassergehalt von weniger als 0,3 Gewichts-% aus einer durch Umsetzung von Sand mit Natronlauge im Molverhältnis SiO₂ : Na₂O von (2,0 bis 2,3) : 1 gewonnenen Wasserglaslösung mit mindestens 20 Gewichts-% Feststoff, Sprühtrocknen der Wasserglaslösung mit Heißluft von 200 bis 300°C unter Bildung eines pulverförmigen, amorphen Natriumsilikates mit einem Wassergehalt (ermittelt als Glühverlust bei 700°C) von 15 bis 23 Gewichts-%, Behandeln des in einem geneigt angeordneten Drehrohrofen eingebrachten pulverförmigen, amorphen, wasserhaltigen Natriumsilikates im Gegenstrom mit Rauchgas mit Temperaturen von mehr als 500 bis 850°C unter Bildung von kristallinem Natriumsilikat, Zerkleinern des aus dem Drehrohrofen austretenden Natriumsilikates auf Korngrößen von 0,1 bis 12 mm und anschließendes Kahlen auf Korngrößen von 2 bis 400 µm.

Aus der nichtvorveröffentlichten deutschen Patentanmeldung P 40 31 848.6 sowie der älteren EP-A-425 428 ist ein Verfahren zur Herstellung von kristallinen Natriumsilikaten mit Schichtstruktur aus einer Wasserglaslösung bekannt. Dabei behandelt man die durch Umsetzung von Quarzsand mit Natronlauge im Molverhältnis SiO₂ zu Na₂O von (2,0 bis 2,3) : 1 gewonnene Wasserglaslösung in einer Sprühtrocknungszone mit Heißluft von 200 bis 300 °C unter Bildung eines pulverförmigen, amorphen Natriumsilikates mit einem Wassergehalt (ermittelt als Glühverlust bei 700 °C) von 15 bis 23 Gewichts-%. Dieses amorphe Natriumsilikat bringt man in einen geneigt angeordneten Drehrohrofen ein und behandelt es darin mit Rauchgas bei Temperaturen von mehr als 500 bis 850°C unter Bildung von kristallinem Natriumsilikat. Das aus dem Drehrohrofen austretende Natriumsilikat zerkleinert man auf Korngrößen von 0,1 bis 12 mm und mahlt es schließlich auf Korngrößen von 2 bis 400 µm.

Nachteilig ist bei diesem Verfahren, daß das sprühgetrocknete, amorphe Natriumsilikat wegen seiner Hohlkugelstruktur bei seinem Einbringen in den Drehrohrofen einen extrem leichten Staub bildet, wodurch neben einer hohen Belastung des Abgasfilters der Drehrohrofen überfüllt und wegen des dadurch behinderten Stofftransports im Drehrohrofen seine Kapazität erniedrigt wird.

Die genannten Nachteile werden erfindungsgemäß dadurch überwunden, daß man das sprühgetrocknete, pulverförmige, amorphe Natriumsilikat vor seinem Einbringen in den Drehrohrofen aufmahlt.

Das Verfahren gemäß der Erfindung kann auch noch dadurch ausgestaltet sein, daß man auf Korngrößen von 1 bis 50 µm aufmahlt. Dabei kann die Aufmahlung mit Hilfe jeden Mühlentyps erfolgen, der in der Lage ist, die geforderte Kornfeinheit bereitzustellen.

Beim erfindungsgemäßen Verfahren weist das aus dem Drehrohrofen abströmende Abgas nur einen geringen Staubgehalt auf.

Beim Verfahren gemäß der Erfindung ist im Drehrohrofen ein höherer Füllgrad möglich, wodurch die Kapazität des Drehrohrofens erhöht wird.

Beim erfindungsgemäßen Verfahren klebt an der Innenwandung des Drehrohrofens praktisch kein Material an, was eine Verbesserung der Qualität des aus dem Drehrohrofen austretenden Natriumsilikates mit sich bringt.

Das in den folgenden Beispielen angegebene Kalkbindevermögen der erhaltenen Natriumsilikate mit Schichtstruktur wurde nach folgender Vorschrift ermittelt:
1 l destilliertes Wasser wurde mit CaCl₂-Lösung (entsprechend 300 mg CaO) versetzt, wodurch ein Wasser mit 30°d erhalten wurde.
Zu 1 l dieses auf 20°C temperierten Wassers wurden 1 g des in den Beispielen erhaltenen kristallinen Natriumsilikates sowie 0 bis 6 ml einer 1-molaren Glykokoll-Lösung (erhalten aus 75,1 g Glykokoll und 58,4 g NaCl, welche mit Wasser zu 1 l gelöst wurden) gegeben, wonach sich ein pH-Wert von 10,4 einstellte. Die Suspension wurde 30 Minuten bei 20°C gerührt, währenddessen der pH-Wert stabil blieb. Schließlich wurde abfiltriert und im Filtrat das in Lösung verbliebene Calcium komplexometrisch bestimmt. Durch Differenzbildung mit dem ursprünglichen Gehalt wurde das Kalkbindevermögen ermittelt.

### Beispiel 1 (Vergleichsbeispiel)

In einen mit Nickel ausgekleideten, zylindrischen Autoklaven mit Rühreinrichtung wurden Sand (99 Gewichts-% SiO₂; Körnung: 90 % < 0,5 mm) und 50 gewichts-%ige Natronlauge im. molaren Verhältnis von SiO₂ zu Na₂O von 2,15 : 1 eingefüllt. Die Mischung wurde bei gerührtem Autoklaven durch Aufpressen von Wasserdampf (16 bar) auf 200°C erhitzt und 60 Minuten bei dieser Temperatur gehalten. Dann wurde der Inhalt des Autoklaven über ein Ausdampfgefäß in einen Behälter entspannt und nach Zusatz von 0,3 Gewichts-% Perlit als Filterhilfsmittel bei 90°C zur Abscheidung des Unlöslichen über ein Scheibendruckfilter filtriert. Als Filtrat wurde eine klare Wasserglaslösung mit einem molaren Verhältnis von SiO₂ zu Na₂O von 2,04 : 1 erhalten. Durch Verdünnen mit Wasser wurde ein Feststoffgehalt von 50 % eingestellt.

In einen mit einem Scheibenzerstäuber ausgerüsteten Heißluftsprühturm, welcher über eine gasbefeuerte Brennkammer beheizt wurde und mit einem pneumatisch abreinigenden Schlauchfilter zur Produktabscheidung verbunden war, wurde die Wasserglaslösung versprüht, wobei die Brennkammer so eingestellt war, daß das am Turmkopf eintretende heiße Gas eine Temperatur von 260°C aufwies. Die Menge der zu versprühenden Wasserglaslösung wurde so eingestellt, daß die Temperatur des den Sprühturm verlassenden Silikat-Gas-Gemisches 105°C betrug. Aus dem Volumen des Sprühturmes und aus dem Gasdurchsatz durch den Sprühturm wurde die Verweilzeit zu 16 Sekunden berechnet. Das am Schlauchfilter abgeschiedene amorphe Natriumdisilikat wies ein Schüttgewicht von 480 g/l, einen Eisengehalt von 0,01 Gewichts-%, ein SiO₂ : Na₂O-Verhältnis von 2,04 : 1 und einen Glühverlust bei 700°C von 19,4 % auf; sein mittlerer Teilchendurchmesser betrug 52 µm.

In einen direkt befeuerten Drehrohrofen (Länge: 5 m; Durchmesser: 78 cm; Neigung: 1,2°) wurde an seinem der Flamme gegenüberliegenden Ende das amorphe Natriumdisilikat aufgegeben, während das kristalline Produkt an der Flammseite ausgetragen wurde. Dieser Drehrohrofen war mit mehrlagiger Mineralwolle und einem Blechmantel derart isoliert worden, daß bei einer Temperatur im Inneren des Drehrohrofens von 730°C an seiner Außenhaut eine Temperatur von maximal 54°C auftrat. In diesen Drehrohrofen wurden stündlich 60 kg des amorphen Natriumdisilikates eingetragen. Das den Drehrohrofen verlassende kristalline Natriumdisilikat (Na₂Si₂O₅ mit Schichtstruktur), welches einen Wassergehalt (ermittelt als Glühverlust bei 700°C) von 0,1 Gewichts-% aufwies, wurde mit Hilfe eines mechanischen Brechers auf eine Körnung von weniger als 6 mm zerkleinert und nach einer Zwischenkühlung auf einer Scheibenmühle (Durchmesser: 30 cm) bei 400 min⁻¹ auf einen mittleren Teilchendurchmesser von 110 µm gemahlen, wobei der Eisengehalt des gemahlenen Produktes mit dem des amorphen Natriumdisilikates identisch blieb.
Das Abgas des Drehrohrofens wurde im Eintragsbereich für das amorphe Natriumsilikat abgesaugt und mit Hilfe eines Tuchfilters gereinigt. Aus dem Filter wurden stündlich 5 kg Natriumdisilikat ausgetragen, welches aus Hohlkugeln (Schüttgewicht: 30 g/l; bis 3 mm Durchmesser) bestand und in den Eintrag des Drehrohrofens rückgeführt wurde.

Das Kalkbindevermögen des kristallinen Natriumdisilikates betrug bei pH 10,4 und 20°C 82 mg Ca/g.

### Beispiel 2 (gemäß der Erfindung)

Das nach Beispiel 1 im Heißluftsprühturm hergestellte amorphe Natriumdisilikat mit einem Schüttgewicht von 480 g/l wurde mit Hilfe einer schnellaufenden Schlägermühle aufgemahlen, wobei ein Produkt mit einem mittleren Durchmesser d₅₀ = 22 µm und einem Schüttgewicht von 650 g/l resultierte.
Vergleicht man das im Heißluftsprühturm erhaltene amorphe Natriumdisilikat vor und nach seiner Mahlung in der Schlägermühle unter dem Mikroskop miteinander, so ist deutlich erkennbar, daß die ursprünglichen Hohlkugeln zu Bruchstücken von Kugeln zertrümmert worden sind.
In den in Beispiel 1 verwendeten und unter den dort beschriebenen Bedingungen betriebenen Drehrohrofen wurden stündlich 120 kg des aufgemahlenen amorphen Natriumdisilikates eingetragen, wobei sich keinerlei Verklebungen an der Innenwand des Drehrohrofens ausbildeten.
Am Tuchfilter, mit dessen Hilfe die im Eintragsbereich für das amorphe Natriumdisilikat abgesaugte Luft entstaubt wurde, fielen stündlich 2 kg Natriumdisilikat mit einem Schüttgewicht von 250 g/l an, welches in den Eintrag des Drehrohrofens rückgeführt wurde.

Das Kalkbindevermögen des aus dem Drehrohrofen ausgetragenen und zerkleinerten kristallinen Natriumdisilikates betrug bei pH 10,4 und 20°C 85 mg Ca/g.

## Patentansprüche

1. Verfahren zur Herstellung von kristallinen Natriumsilikaten mit Schichtstruktur, einem Molverhältnis von SiO₂ zu Na₂O von (1,9 bis 2,1) : 1 und einem Wassergehalt von weniger als 0,3 Gewichts-% aus einer durch Umsetzung von Sand mit Natronlauge im Molverhältnis SiO₂ : Na₂O von (2,0 bis 2,3) : 1 gewonnenen Wasserglaslösung mit mindestens 20 Gewichts-% Feststoff, Sprühtrocknen der Wasserglaslösung mit Heißluft von 200 bis 300°C unter Bildung eines pulverförmigen, amorphen Natriumsilikates mit einem Wassergehalt (ermittelt als Glühverlust bei 700°C) von 15 bis 23 Gewichts-%, Behandeln des in einem geneigt angeordneten Drehrohrofen eingebrachten pulverförmigen, amorphen, wasserhaltigen Natriumsilikates im Gegenstrom mit Rauchgas mit Temperaturen von mehr als 500 bis 850°C unter Bildung von kristallinem Natriumsilikat; Zerkleinern des aus dem Drehrohrofen austretenden Natriumsilikates auf Korngrößen von 0,1 bis 12 mm und anschließendes Mahlen auf Korngrößen von 2 bis 400 µm, dadurch gekennzeichnet, daß man das sprühgetrocknete, pulverförmige, amorphe Natriumsilikat vor seinem Einbringen in den Drehrohrofen aufmahlt.

2. Verfahren nach Anspruch 1, dadurch gekennzeichnet, daß man auf Korngrößen von 1 bis 50 µm aufmahlt.

## Claims

1. A process for the preparation of a crystalline sodium silicate having a laminar structure, a molar ratio of SiO₂ to Na₂O of (1.9 to 2.1) : 1 and a water content of less than 0.3 % by weight from a water glass solution having a solids content of at least 20 % by weight and obtained by reaction of sand with sodium hydroxide solution in a molar ratio of SiO₂ : Na₂O of (2.0 to 2.3) : 1, by spray-drying the water glass solution with hot air of 200 to 300°C to form a pulverulent, amorphous sodium silicate having a water content (determined as the loss on ignition at 700°C) of 15 to 23 % by weight, treatment of the pulverulent, amorphous, water-containing sodium silicate, which has been introduced into an inclined rotary kiln, in countercurrent with flue gas at temperatures of more than 500 to 850°C to form crystalline sodium silicate; comminution of the sodium silicate issuing from the rotary kiln to particle sizes of 0.1 to 12 mm and subsequent grinding to particle sizes of 2 to 400 µm, which comprises grinding the spray-dried, pulverulent, amorphous sodium silicate before it is introduced into the rotary kiln.

2. The process as claimed in claim 1, wherein the sodium silicate is ground to particle sizes of 1 to 50 µm.

## Revendications

1. Procédé pour la préparation de silicates de sodium cristallins à structure lamellaire, à un rapport molaire SiO₂/Na₂O de (1,9 à 2,1):1 et une teneur en humidité inférieure à 0,3 % en poids, à partir d'une lessive de silicate de sodium à au moins 20 % en poids de matières sèches, elle-même obtenue par réaction du sable avec la lessive de soude à un rapport molaire SiO₂/Na₂O de (2,0 à 2,3):1, par séchage par atomisation de la lessive de silicate de sodium avec de l'air chaud à des températures de 200 à 300°C, ce qui donne un silicate de sodium amorphe pulvérulent à une teneur en humidité (perte à la calcination à 700°C) de 15 à 23 % en poids, traitement du silicate de sodium aqueux pulvérulent amorphe introduit dans un four rotatif tubulaire incliné à contre-courant par des gaz de fumées à des températures supérieures à 500°C et pouvant aller jusqu'à 850°C, ce qui donne un silicate de sodium cristallin; broyage du silicate de sodium sortant du four tubulaire rotatif jusqu'à des dimensions de grains de 0,1 à 12 mm puis broyage jusqu'à des dimensions de grains de 2 à 400 µm, caractérisé en ce que le silicate de sodium pulvérulent amorphe séché par atomisation est broyé avant son introduction dans le four tubulaire rotatif.

2. Procédé selon la revendication 1, caractérisé en ce que l'on broie jusqu'à des dimensions de grains de 1 à 50 µm.
